# EUROPÄISCHE PATENTSCHRIFT

(11) **EP 0 715 235 B1**
(45) Veröffentlichungstag und Bekanntmachung des Hinweises auf die Patenterteilung: **01.03.2000**
(21) Anmeldenummer: 95118750.9
(22) Anmeldetag: 29.11.1995
(51) Int. Cl.: G05B 19/042

(54) **Haushaltgerät mit einem Mikroprozessor und einem programmierbaren, nichtflüchtigen Speicher zur Veränderung von Prozessparametern**
Household apparatus with a microprocessor and a non-volatile memory for changing parameters
Appareil ménager avec un microprocesseur et une mémoire non-volatile pour le changement de paramètres du processus

(30) Priorität: 02.12.1994 DE 4442967; 14.02.1995 DE 19504710
(43) Veröffentlichungstag der Anmeldung: 05.06.1996
(73) Patentinhaber: Miele & Cie. GmbH & Co., D-33332 Gütersloh (DE)
(72) Erfinder: Avenwedde, Josef, D-33415 Verl (DE); Hiddemann, Friedrich, D-33605 Bielefeld (DE); Peters, Hans-Eckart, D-33332 Gütersloh (DE); Wienströer, Rainhard, D-33803 Steinhagen (DE); Bröckelmann, Gerd, D-33378 Rheda-Wiedenbrück (DE)

(56) Entgegenhaltungen:
- WO-A-93/22743
- DE-A- 4 013 726
- GB-A- 2 191 615
- GB-A- 2 202 973
- US-A- 5 299 113

## Beschreibung

Die Erfindung betrifft ein Haushaltgerät, insbesondere eine Wasch- oder Geschirrspülmaschine, mit einer Mikroprozessorsteuerung, welcher ein programmierbarer, nichtflüchtiger Speicher zur Aufnahme von Prozeßparametem zugeordnet ist und mit einer Schnittstelle zur Eingabe oder Veränderung der Prozeßparameter und/oder zum Auslesen von Daten aus der Mikroprozessorsteuerung durch ein externes Datenverarbeitungsgerät. Daneben betrifft die Erfindung ein Datenverarbeitungsgerät zur Eingabe von Prozeßparametem insbesondere in solche Haushaltgeräte.

In den vorgenannten Haushaltgeräten kann die Überschreibung von Prozeßparametem, ein sogenanntes Updating über eine Schnittstelle an der Mikroprozessorsteuerung vorgenommen werden (DE 40 01 279 A1) . Solche Schnittstellen sind in der Regel als externe Kontaktvorrichtung am Gerät oder an der Leiterkarte der Mikroprozessorsteuerung angeordnet. Im ersten Fall ergibt sich der Nachteil, daß ein spannungsführender Anschluß in den Außenbereich des Haushaltgerätes verlegt wird und somit strenge Sicherheitsvorkehrungen notwendig sind, um den Benutzer zu schützen. Im zweiten Fall besteht der Nachteil, daß der Kundendiensttechniker zur Änderung der Prozeßparameter das Haushaltgerät öffnen muß.

Die Druckschrift US 5,299,113 zeigt ein Haushaltgerät mit einer optischen Schnittstelle zu einem externen Datenverarbeitungsgerät, wobei die Schnittstelle als zusätzliche Baueinheit ausgeprägt ist.

Der Erfindung stellt sich somit das Problem, ein Haushaltgerät zu schaffen, bei dem eine Änderung der Prozeßparameter oder das Auslesen von Prozeßdaten einfach vorzunehmen ist. Dieses Problem wird durch ein Haushaltgerät mit den Merkmalen des Anspruches 1 gelöst.

Der mit dem erfindungsgemäßen Haushaltgerät erreichbare Vorteil besteht darin, daß die optische Schnittstelle übersichtlich und leicht erreichbar auf dem Bedienfeld des Haushaltgerätes angeordnet werden kann. Außerdem muß keine separate Schnittstelle eingerichtet werden. Das Bedienfeld des Haushaltgeräts bleibt somit übersichtlich und in seinen Funktionen für den Benutzer überschaubar. Weitere vorteilhafte Ausgestaltungen des Haushaltgerätes ergeben sich aus den nachfolgenden Unteransprüchen.

Daneben liegt der Erfindung das Problem zugrunde, ein Datenverarbeitungsgerät zu offenbaren, mit dem eine solche Änderung der Prozeßparameter leicht vorzunehmen ist. Dieses Problem wird durch ein Datenverarbeitungsgerät mit den Merkmalen des Anspruchs 5 gelöst. Der mit der erfindungsgemäßen Ausbildung des Datenverarbeitungsgeräts gemäß Anspruch 5 erreichbare Vorteil besteht in einem einfachen, leicht handhabbaren Aufbau.

In einer vorteilhaften Ausführungsform der Erfindung ist die Vorrichtung zur Übergabe und/oder Verarbeitung von optischen Signalen als mit einer Saugvorrichtung ausgestatteter Adapter zur Aufnahme eines Lichtwellenleiters ausgebildet und/oder es besteht eine magnetische Kopplung zwischen Lichtwellenleiter und Anzeigeelement. Hierdurch kann eine sichere Verbindung zwischen Lichtwellenleiter und Adapter hergestellt werden.

Daneben ist es vorteilhaft, wenn der Lichtwellenleiter nach dem Positionieren des Adapters auf die Anzeigevorrichtung in eine Bohrung im Adapter einsetzbar ist. Hierdurch ist die Anzeigevorrichtung beim Anbringen des Adapters auf dem Bedienfeld sichtbar, was eine genauere Positionierung zuläßt. Um eine noch genauere Positionierung zu gewährleisten, kann vorteilhafterweise eine Positionieranzeige vorgesehen werden, welche den Empfang eines von der Anzeigevorrichtung ausgestrahlten Dauersignals anzeigt.

Eine andere vorteilhafte Ausgestaltung des erfindungsgemäß gestalteten Datenverarbeitungsgerätes ist dadurch gekennzeichnet, daß die Vorrichtung zur Übergabe und/oder Verarbeitung von optischen Signalen selbst als aktive Sende-/Empfangseinrichtung ausgebildet ist, welche optische in elektrische und elektrische in optische Signale umwandelt. Hierdurch kann der anstelle eines teuren Lichtwellenleiters ein preisgünstigeres Kabel zur Übergabe der Signale bzw. Daten von der Anzeigevorrichtung zum PC verwendet werden. Auch bei einer solchen Übergabevorrichtung gemäß Anspruch 11 können Magnetkupplungen und/oder Sauger als Halterungen verwendet werden.

Ein Ausführungsbeispiel der Erfindung ist anhand der Zeichnungen rein schematisch dargestellt und wird im Folgenden näher beschrieben. Es zeigen:
- Figur 1: die gesamte Datenübertragungsstrecke zwischen Datenverarbeitungsgerät und der Mikroprozessorsteuerung (2) des Haushaltsgerätes;
- Figur 2: die Bedienblende (1) eines erfindungsgemäßen Haushaltgerätes in der Draufsicht.;
- Figur 3: einen Ausschnitt aus der optischen Datenübertragungsstrecke gemäß Figur 1 im Bereich der optischen Schnittstelle;
- Figur 4: die Datenübertragungsstrecke eines weiteren Ausführungsbeispiels.

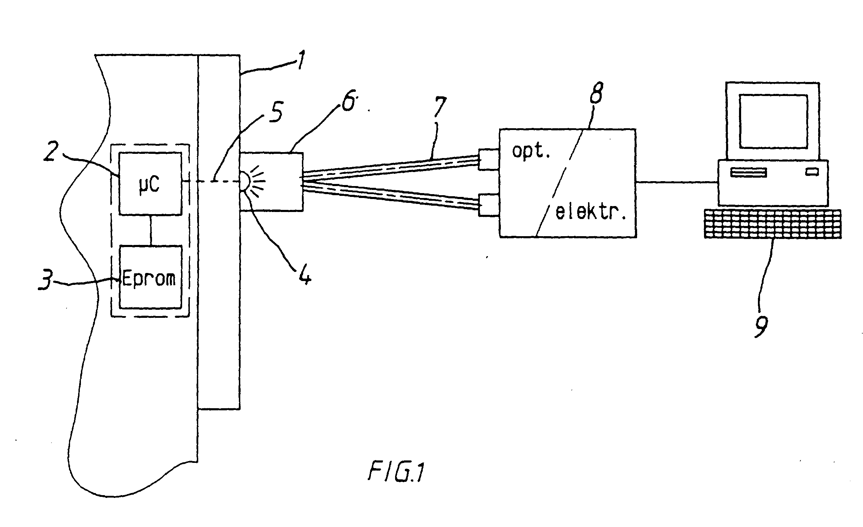

Figur 1 zeigt den Ausschnitt aus einem Haushaltgerät im Bereich der Bedienblende (1). Dieses Haushaltgerät besitzt eine Mikroprozessorsteuerung (2) zur Steuerung von wählbaren Waschoder Spülprogrammen. Dabei empfängt die Mikroprozessorsteuerung (2) Signale von in den Zeichnungen nicht dargestellten Sensoren und beeinflußt in Abhängigkeit von diesen Signalen die verschiedenen, in den Zeichnungen ebenfalls nicht dargestellten Aktoren des Haushaltsgerätes, wie z. B. Heizungen oder Motoren. Hierzu ruft sie aus einem programmierbaren, nichtflüchtigen Speicher, beispielsweise einem EPROM (3), Prozeßparameter zur Steuerung dieser Aktoren auf.

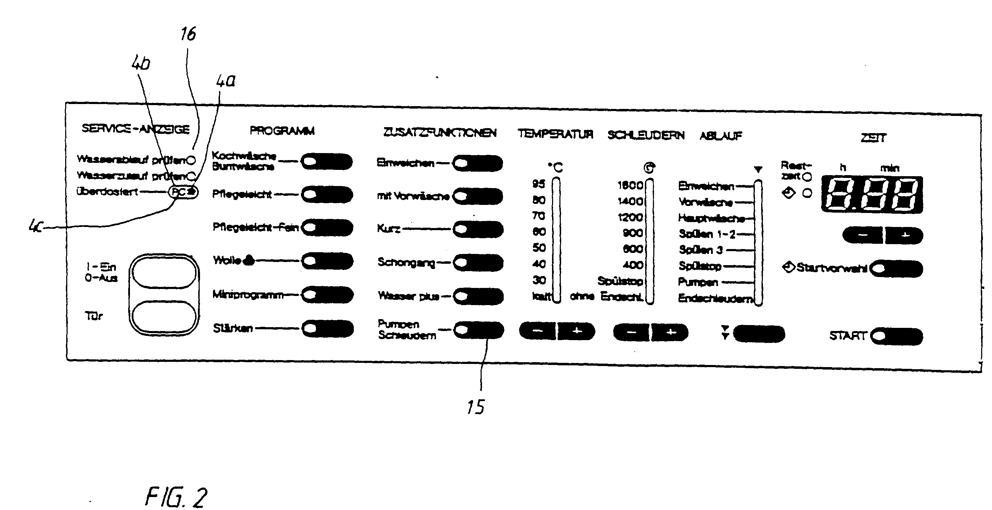

Figur 2 zeigt die Bedienblende (1) des erfindungsgemäßen Haushaltgeräts in der Draufsicht. Zur Einstellung von Programmen und Zusatzfunktionen dienen Drucktasten (15). In den Drucktasten (15) und in separaten Anzeigeblöcken (16) sind optische Anzeigevorrichtungen (4) in Form von LED's angeordnet.

Mindestens eine dieser Anzeigevorrichtungen (4), im Ausführungsbeispiel die *Überdosiert*-Anzeige (4a), ist als optische Schnittstelle in Form einer Lichtsende-/Empfangseinrichtung ausgebildet. Um diese Anzeige (4a) als Schnittstelle zu kennzeichnen, ist sie mit einer Umrahmung (4b) und dem Schriftzug "PC" (4c) versehen. Die Anzeige (4a) steht über eine Datenleitung (5) mit der Mikroprozessorsteuerung (2) und hierüber mit dem EPROM (3) in Verbindung (s. Figur 1). Um eine Verbindung zwischen der Mikroprozessorsteuerung (2) und einem externen Datenverarbeitungsgerät herzustellen, wird auf der Bedienblende (1) die Anzeige (4a) mit diesem externen Datenverarbeitungsgerät kontaktiert.

Das externe Datenverarbeitungsgerät besitzt einen Adapter (6), welcher über Lichtwellenleiter (7) mit einem Interface (8) zur Umwandlung elektrischer Signale in optische Signale und elektrischer in optische Signale in Verbindung steht. Das Eingeben und Auslesen von Daten erfolgt beispielsweise durch einen Personal Computer (9).

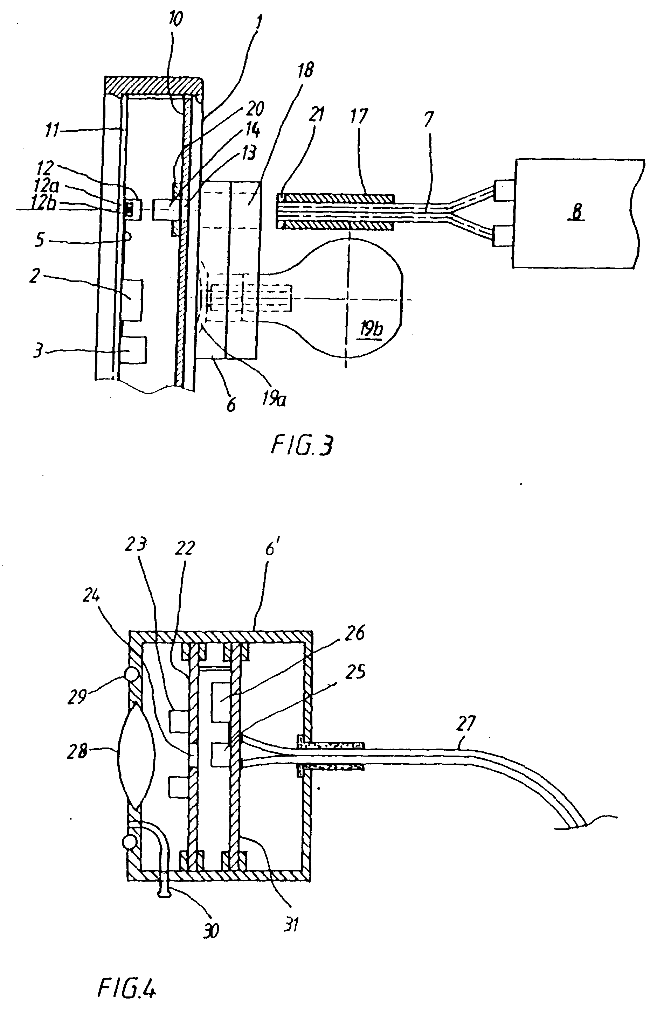

Figur 3 zeigt einen Ausschnitt aus der Datenübertragungsstrecke im Bereich der Anzeige (4a). In diesem Teil erfolgt zwischen Anzeige(4a) und Interface (8) eine Übertragung von optischen Signalen. Die Bedienblende (1) des Haushaltgeräts ist aus einem transparenten Werkstoff gefertigt und wird von einer am Gerätegehäuse befestigten Halteplatte (10) aufgenommen. Hinter der Halteplatte (10) ist eine Leiterkarte (11) angeordnet, welche unter anderem die Mikroprozessorsteuerung (2) und das EPROM (3) trägt. Daneben ist auf der Leiterkarte (11) ein Multi-Chip-Halbleiter (12) angeordnet, welche aus einer Kombination aus einem Fototransistor (12a) und einer Leuchtdiode (12b) besteht. Vor diesem Multi-Chip-Halbleiter (12) ist in einer Öffnung (13) der Halteplatte (10) ein stabförmiges Lichtwellenleiterelement (14) plaziert, welches für eine Bündelung des Lichts zwischen Multi-Chip-Halbleiter (12) und Bedienblende (1) sorgt. Die Kombination aus Multi-Chip-Halbleiter (12) und Lichtwellenleiterelement (14) dient während des normalen Programmablaufs als *Überdosiert*-Anzeige (4a).

Zur Eingabe oder Veränderung der Prozeßparameter außerhalb eines laufenden Programms erzeugt die Leuchtdiode (12b) Dauerlicht. Den Schaltbefehl hierzu erhält sie von der Mikroprozessorsteuerung (2) durch Betätigung einer Kombination von Drucktasten (15). Im Anschluß daran wird der Adapter (6) auf die Bedienblende (1) aufgesetzt. Um eine genaue Positionierung über der Anzeige (4a) zu erreichen, wird der von einer Hülse (17) umgebene Lichtwellenleiter (7) zunächst aus seiner Halterung, einer Bohrung (18) im Adapter (6), herausgenommen und der Adapter (6) derart plaziert, daß durch die Bohrung (18) die Anzeige (4a) sichtbar ist. Danach kann die Hülse (17) samt Lichtwellenleiter (7) in die Bohrung (18) eingesetzt werden. Der Adapter (6) wird durch einen Saugnapf (19a) und einen Saugbalg (19b) an der Bedienblende (1) gehalten. Als zusätzliche Halterung ist eine Magnetkupplung vorhanden, welche aus einem um das Lichtwellenleiterelement (14) angeordneten magnetischen Ring (20) und einem metallischen Ring (21) an der Spitze der Hülse (17) besteht. Die Magnetkupplung (20;21) kann auch separat ohne Saugvorrichtung (15;19) eingesetzt werden. Für Bedienblenden (1) mit schmalen Anzeigeleisten kann eine Saugleiste oder ein Saugkissen mit mehreren kleinen Saugnäpfen verwendet werden.

Nach der exakten Positionierung befinden sich die freien Enden der Lichtwellenleiter (7) über dem Lichtwellenleiterelement (14). Diese Position wird durch eine Positionieranzeige bestätigt, wozu der Personal Computer (9) eine Messung des Lichtstroms der Leuchtdiode (12b) vornimmt und bei Empfang des Dauerlichts eine Bereitschafts-Anzeige abgibt. Danach wird zur Eingabe von Daten die Eingabebereitschaft des EPROMs (3) hergestellt und die dort abgespeicherten Prozeßparameter mit Hilfe des Personal Computers (9) und des Interfaces (8) überschrieben. Zum Auslesen von Daten greift der Personal Computer (9) auf die Mikroprozessorsteuerung (2) zu und zeigt von dort zur Verfügung gestellte Daten an. Anhand dieser Daten kann beispielsweise ein Programmablauf oder die Funktion einzelner Verbraucher kontrolliert oder Programm- oder Gerätedaten ausgelesen werden.

Figur 4 zeigt eine Datenübertragungsstrecke, bei der im Adapter (6') ein aktiver Sende-/-Empfangsbaustein angeordnet ist. Dieser besitzt eine erste Platine (22) mit einer oder mehreren Sende-LED's (23), über die Signale vom Personal Computer (9) an die Mikroprozessorsteuerung (2) weitergegeben werden. In der Mitte der ersten Platine ist eine Öffnung (24) angeordnet, hinter der ein Empfänger, beispielsweise eine Foto-LED (25) mit nachgeschaltetem Verstärker (26) auf einer zweiten Platine (31) plaziert ist. Hiermit werden die Signale aus der Mikroprozessorsteuerung (2) empfangen und vor der Weitergabe an den Personal Computer (9) aufbereitet. Von hier erfolgt die weitere Signalübertragung über elektrische Verbindungsleitungen (27). An der Koppelstelle zum Anzeigeelement besitzt der Adapter (6') eine Linse (28) zur Bündelung der Lichtsignale. Die Halterung des Adapters (6') am Bedienfeld erfolgt über einen Dichtungsring (29) und einen Vakuumanschluß (30) für eine in der Zeichnung nicht dargestellte Vakuumpumpe. Die Positionierung kann wie beim in Figur 3 beschriebenen Ausführungsbeispiel erfolgen.

## Patentansprüche

1. Haushaltgerät, insbesondere Wasch- oder Geschirrspülmaschine, mit einer Mikroprozessorsteuerung (2), welcher ein programmierbarer, nichtflüchtiger Speicher (3) zur Aufnahme von Prozeßparametern zugeordnet ist und mit einer Schnittstelle zu einem externen Datenverarbeitungsgerät zur Eingabe oder Veränderung der Prozeßparameter und/oder zum Auslesen von Daten aus der Mikroprozessorsteuerung (2)
dadurch gekennzeichnet,
daß als Schnittstelle eine vorhandene Anzeigevorrichtung (4;4a) des Haushaltgerätes mit verwendet wird, wobei die Anzeigevorrichtung (4;4a) als Lichtsende-/Empfangseinrichtung ausgebildet ist.

2. Haushaltgerät nach Anspruch 1,
dadurch gekennzeichnet,
daß die Anzeigevorrichtung (4;4a) im Bereich der Bedienblende (1) des Haushaltgeräts angeordnet ist.

3. Haushaltgerät nach einem der Ansprüche 1 oder 2,
dadurch gekennzeichnet,
daß die Anzeigevorrichtung (4;4a) aus einem auf einer Leiterkarte (11) hinter der Bedienblende (1) angeordneten Multi-Chip-Halbleiter (12) und einer von diesem Multi-Chip-Halbleiter (12) zur Bedienblende (1) führenden Lichtwellenleiterelement (14) besteht.

4. Haushaltgerät nach den Ansprüchen 2 und 3,
dadurch gekennzeichnet,
daß die Bedienblende (1) mindestens im Bereich der Anzeigevorrichtung (4;4a) aus einem transparenten Werkstoff gefertigt ist und daß das Lichtwellenleiterelement (14) in einer die Bedienblende (1) aufnehmende Halteplatte (10) befestigt ist.

5. Datenverarbeitungsgerät zur Eingabe oder Veränderung der Prozeßparameter und/oder zum Auslesen von Daten eines Haushaltgerätes nach einem der Ansprüche 1 bis 4,
gekennzeichnet durch eine Vorrichtung zur Übergabe und/oder Verarbeitung von optischen Signalen, welche auf die Anzeigevorrichtung (4;4a) aufsetzbar ist.

6. Datenverarbeitungsgerät nach Anspruch 5,
dadurch gekennzeichnet, daß die Vorrichtung zur Übergabe und/oder Verarbeitung von optischen Signalen als mit einer Saugvorrichtung (15,19)) ausgestatteter Adapter (6) zur Aufnahme eines Lichtwellenleiters (7) ausgebildet ist.

7. Datenverarbeitungsgerät nach Anspruch 6,
dadurch gekennzeichnet,
daß der Lichtwellenleiter (7) nach dem Positionieren des Adapters (6) auf die Anzeigevorrichtung in eine Bohrung (18) im Adapter einsetzbar ist.

8. Datenverarbeitungsgerät nach einem der Ansprüche 5 bis 7,
dadurch gekennzeichnet,
daß die Vorrichtung zur Übergabe und/oder Verarbeitung von optischen Signalen als Lichtwellenleiter (7) ausgebildet ist, dessen freies Ende mit der Anzeigevorrichtung magnetisch koppelbar ist.

9. Datenverabeitungsgerät nach Anspruch 8 und Haushaltgerät nach einem der Ansprüche 1 bis 4,
dadurch gekennzeichnet,
daß die Anzeigevorichtung (4;4a) von einem Magneten (20) und der Lichtwellenleiter von einer Hülse (17) umgeben ist, an deren freiem Ende ein Metall-oder Magnetelement (21) angeordnet ist.

10. Datenverarbeitungsgerät nach einem der Ansprüche 5 bis 9,
gekennzeichnet durch einen Personal Computer (9) und ein Interface (8) zur Umwandlung von elektrischen in optische und von optischen in elektrische Signale.

11. Datenverarbeitungsgerät nach Anspruch 5,
dadurch gekennzeichnet,
daß die Vorrichtung zur Übergabe und/oder Verarbeitung von optischen Signalen als aktiver Sende-/Empfangsbaustein zur Umwandlung von optischen in elektrische und elektrischen in otische Signale ausgebildet ist.

12. Datenverarbeitungsgerät nach einem der Ansprüche 5 bis 11,
gekennzeichnet durch eine Positionieranzeige, welche den Empfang eines von der Anzeigevorrichtung (4;4a) ausgestrahlten Dauersignals anzeigt.

## Claims

1. Domestic appliance, more especially a washing machine or a dishwasher, having a microprocessor control (2), which has associated therewith a programmable, non-volatile memory (3) for receiving operational parameters, and having an interface for an external data processing apparatus for inputting or changing the operational parameters and/or for reading data from the microprocessor control (2), characterised in that an existing display device (4; 4a) of the domestic appliance is used as the interface, the display device (4; 4a) being in the form of a light-transmitting/-receiving means.

2. Domestic appliance according to claim 1, characterised in that the display device (4; 4a) is disposed in the region of the control screen (1) of the domestic appliance.

3. Domestic appliance according to one of claims 1 or 2, characterised in that the display device (4; 4a) comprises a multi-chip semiconductor (12), which is disposed on a printed circuit card (11) behind the control screen (1), and a light-wave conductor element (14), which extends from this multi-chip semiconductor (12) to the control screen (1).

4. Domestic appliance according to claims 2 and 3, characterised in that the control screen (1) is produced from a transparent material, at least in the region of the display device (4; 4a), and in that the light-wave conductor element (14) is secured in a retaining plate (10) accommodating the control screen (1).

5. Data processing apparatus for inputting or changing the operational parameters and/or for reading data of a domestic appliance according to one of claims 1 to 4, characterised by a device for transferring and/or processing optical signals, which device is mountable on the display device (4, 4a).

6. Data processing apparatus according to claim 5, characterised in that the device for transferring and/or processing optical signals is in the form of an adapter (6), which is provided with a suction device (15, 19), for accommodating a light-wave conductor (7).

7. Data processing apparatus according to claim 6, characterised in that the light-wave conductor (7) is insertable into a bore (18) in the adapter (6) after the adapter has been positioned on the display device.

8. Data processing apparatus according to one of claims 5 to 7, characterised in that the device for transferring and/or processing optical signals is in the form of a light-wave conductor (7), the free end of which is magnetically connectable to the display device.

9. Data processing apparatus according to claim 8 and domestic appliance according to one of claims 1 to 4, characterised in that the display device (4; 4a) is surrounded by a magnet (20), and the light-wave conductor is surrounded by a sleeve (17), on the free end of which sleeve a metallic or magnetic element (21) is disposed.

10. Data processing apparatus according to one of claims 5 to 9, characterised by a personal computer (9) and an interface (8) for converting electrical signals into optical signals and for converting optical signals into electrical signals.

11. Data processing apparatus according to claim 5, characterised in that the device for transferring and/or processing optical signals is in the form of an active transmitting/receiving component for converting optical signals into electrical signals and electrical signals into optical signals.

12. Data processing apparatus according to one of claims 5 to 11, characterised by a position indicator, which indicates that a continuous signal, emitted by the display device (4; 4a), has been received.

## Revendications

1. Appareil ménager, notamment un lave-linge ou un lave-vaisselle, avec une commande à microprocesseur (2) auquel est attribuée une mémoire programmable non volatile (3) pour l'acquisition de paramètres du processus et munie d'une interface vers un appareil externe de traitement de données pour l'entrée ou la modification des paramètres du processus et/ou pour la lecture des données provenant de la commande à microprocesseur (2), **caractérisé en ce qu'**un dispositif d'affichage existant (4, 4a) de l'appareil ménager est utilisé comme partie d'interface, le dispositif d'affichage (4, 4a) consistant en un émetteur/récepteur lumineux.

2. Appareil ménager selon la revendication 1, **caractérisé en ce que** le dispositif d'affichage (4, 4a) est placé dans la partie du cache abritant les fonctions de service (1) de l'appareil ménager.

3. Appareil ménager selon l'une des revendications 1 ou 2, **caractérisé en ce que** le dispositif d'affichage (4, 4a) est composé d'un semi-conducteur à paillette (12) placé sur une carte de circuits imprimés (11) derrière le cache abritant les fonctions de service (1) et d'un élément conducteur d'onde lumineuse (14) allant de ce semi-conducteur à paillette (12) vers le cache (1).

4. Appareil ménager selon les revendications 2 et 3, **caractérisé en ce que** le cache (1) est fabriqué en un matériau transparent au moins dans la partie du dispositif d'affichage (4, 4a), et que l'élément conducteur d'onde lumineuse (14) est fixé dans une plaque de support (10) dans laquelle se loge le cache (1).

5. Périphérique de traitement des données pour l'entrée ou la modification des paramètres du processus et/ou pour la lecture des données d'un appareil ménager selon l'une des revendications 1 à 4, **caractérisé par** un dispositif pour la restitution et/ou le traitement de signaux optiques, lequel dispositif peut être monté sur le dispositif d'affichage (4, 4a).

6. Périphérique de traitement des données selon la revendication 5, **caractérisé en ce que** le dispositif pour la restitution et/ou le traitement des signaux optiques consiste en un adaptateur (6) pourvu d'un dispositif d'aspiration (15, 19) en vue du logement d'un conducteur d'ondes lumineuses (7).

7. Périphérique de traitement des données selon la revendication 6, **caractérisé en ce que** le conducteur d'ondes lumineuses (7) peut être logé dans un orifice (18) de l'adaptateur après positionnement de l'adaptateur sur le dispositif d'affichage.

8. Périphérique de traitement des données selon l'une des revendications 5 à 7, **caractérisé en ce que** le dispositif pour la restitution et/ou le traitement de signaux optiques consiste en un conducteur d'ondes lumineuses (7) dont l'extrémité libre peut être couplée magnétiquement au dispositif d'affichage.

9. Périphérique de traitement des données selon la revendication 8 et appareil ménager selon l'une des revendications 1 à 4, **caractérisés en ce que** le dispositif d'affichage (4, 4a) est entouré par un aimant (20) et le conducteur d'ondes lumineuses par une douille (17) à l'extrémité libre de laquelle est placé un élément métallique ou un aimant (21).

10. Périphérique de traitement des données selon l'une des revendications 5 à 9, **caractérisé par** un ordinateur personnel (9) et une interface (8) pour la transformation de signaux électriques en signaux optiques et de signaux optiques en signaux électriques.

11. Périphérique de traitement des données selon la revendication 5, **caractérisé en ce que** le dispositif pour la restitution et/ou le traitement de signaux optiques consiste en un module d'émission/réception pour la transformation de signaux optiques en signaux électriques et de signaux électriques en signaux optiques.

12. Périphérique de traitement des données selon l'une des revendications 5 à 11, **caractérisé par** un affichage de positionnement qui affiche la réception d'un signal continu diffusé par le dispositif d'affichage (4, 4a).
